# EUROPEAN PATENT APPLICATION

(11) **EP 4 089 889 A1**
(43) Date of publication of application: **16.11.2022**
(21) Application number: 20912508.7
(22) Date of filing: 18.12.2020
(51) Int. Cl.: H02K 5/22, H02K 3/50, H02K 1/14

(54) **MOTOR**

(30) Priority: 06.01.2020 KR 20200001506; 13.01.2020 KR 20200004472
(71) Applicant: LG Innotek Co., Ltd., Seoul 07796 (KR)
(72) Inventor: JEONG, Woo Ho, Seoul 07796 (KR); PARK, Chang Hyun, Seoul 07796 (KR)
(74) Representative: M. Zardi & Co S.A.
(86) International application number: PCT/KR2020/018674
(87) International publication number: WO 2021/141276

(57) **Abstract**

Provided is an embodiment of a motor comprising: a shaft; a rotor coupled to the shaft; a stator disposed so as to face the motor; a housing for accommodating the stator; and a bus bar electrically connected to the stator, wherein the housing comprises a first stepped part on which at least a part of the bus bar is disposed.

## Description

### TECHNICAL FIELD

The present invention relates to a motor.

### BACKGROUND ART

The motor includes a rotor and a stator. In this regard, the rotor rotates by electrical interaction between the rotor and the stator. The stator is disposed inside the housing. In addition, a bus bar is disposed on the upper side of the stator.

In general, in order to arrange the stator and the bus bar in the housing, a process of hot pre-fitting and fusing is required. In this case, there is a problem in that the stress of the components is increased due to the press-fitting, or it is difficult to manage the fusion site.

### DISCLOSURE

### TECHNICAL PROBLEM

An object of the present invention is to provide a motor in which a coupling structure of a housing, a bus bar, and a stator is simplified.

### TECHNICAL SOLUTION

An embodiment may provide a motor which includes a shaft; a rotor coupled to the shaft; a stator disposed to correspond to the rotor; a housing accommodating the stator; and a bus bar electrically connected to the stator, wherein the housing may include a first stepped portion in which at least a portion of the bus bar is disposed.

Preferably, a plate disposed on the bus bar is included, and a terminal part disposed on the bus bar is included, wherein the plate may include a first hole and the terminal part includes a body part disposed between the housing and the plate and a protrusion protruding through the first hole of the plate.

Preferably, a plate disposed on the bus bar is included, and a terminal part disposed on the bus bar is included, wherein the plate includes a first hole, the terminal part may include a first region protruding through the plate, a second region disposed on one surface of the housing, and a third region protruding from an inner surface of the second region.

Preferably, the body part of the terminal part may include a first body, a second body extending from an upper surface of the first body and penetrating the plate, and a leg portion protruding from an inner surface of the first body, wherein the leg portion and the first body may support a portion of the plate, and the body part may include a second stepped portion defined by an upper surface and an outer surface of the first body and an outer surface of the second body.

Preferably, a third protrusion may be formed on a lower surface of the leg portion, the bus bar may include a first groove formed in a periphery of an upper surface where the protrusion is disposed, and the third protrusion may be disposed in the first groove, and an upper surface of the leg portion may be disposed lower in an axial direction than an upper surface of the second stepped portion.

Preferably, the stator may include a stator core, the stator core may have a first coupling portion formed on an outer side thereof, the housing may have a second coupling portion coupled with the first coupling portion formed on an inner portion thereof, and the second coupling portion may include a first protrusion covering one side of the upper surface of the first coupling portion.

Preferably, the first protrusion may be formed by caulking an upper surface of the second coupling portion.

Preferably, the housing may include a second protrusion covering the other side of the upper surface of the first coupling portion, and the second protrusion may be formed by caulking the upper surface of the second coupling portion.

Preferably, any one of the first coupling portion and the second coupling portion may include a first coupling protrusion, and the other of the first coupling portion and the second coupling portion may include a second coupling groove where the first coupling protrusion is disposed.

Preferably, the stator core may include at least one first guide part formed on an outer circumferential surface, and the housing may include at least one second guide part formed on an inner circumferential surface and coupled to the first guide part.

### EFFECT OF THE INVENTION

According to the embodiment, the coupling structure of the housing, the stator, and the bus bar may be simplified. Accordingly, there is an advantage that the terminal part can be easily mounted without fusion. And, it is possible to reduce the stress of the component due to the hot press-fitting between the housing and the stator.

### BRIEF DESCRIPTION OF THE DRAWINGS

Fig. 1 is a view showing a motor according to an embodiment.
Fig. 2 is a view showing a state in which a bus bar, a plate, and a terminal part are coupled to each other.
Fig. 3 is a view showing a bus bar, a plate, and a terminal part before coupling.
Fig. 4 is a side cross-sectional view of the plate, the housing and the terminal part.
Fig. 5 is a view showing the body of the terminal part.
Fig. 6 is an enlarged view showing the coupling state of the second extension part of the terminal part and the bus bar.
Fig. 7 is an exploded view of the terminal part and the bus bar.
Fig. 8 is a view showing a first stepped portion and a third stepped portion of the housing;
Fig. 9 is a side cross-sectional view of the plate and the housing;
Fig. 10 is a view showing a second protrusion disposed on the first extension of the terminal part.
Fig. 11 is a view showing the coupling of the plate and the housing.
Fig. 12 is a plan view schematically illustrating a coupling state between the stator and the housing.
Fig. 13 is a cross-sectional view taken along AA'.
Fig. 14 is a view showing before and after caulking of the protrusion shown in FIG. 13.
Fig. 15 is a plan view schematically illustrating a modified example of the stator and the housing.
Fig. 16 is a cross-sectional view taken along BB'.
Fig. 17 is a view showing before and after caulking of the protrusion shown in Fig. 16.
Fig. 18 is a plan view schematically illustrating a modified example of the stator and the housing.
Fig. 19 is a cross-sectional view taken along CC'.
Fig. 20 is a view showing before and after caulking of the protrusion shown in Fig. 19.

### BEST MODE

Hereinafter, the preferred embodiments of the present invention will be described in detail with reference to the accompanying drawings.

The direction parallel to the longitudinal direction (up-and-down direction) of the shaft is called the axial direction, the direction perpendicular to the axial direction around the shaft is called the radial direction, and the direction along a circle having a radial radius around the shaft is called the circumference direction.

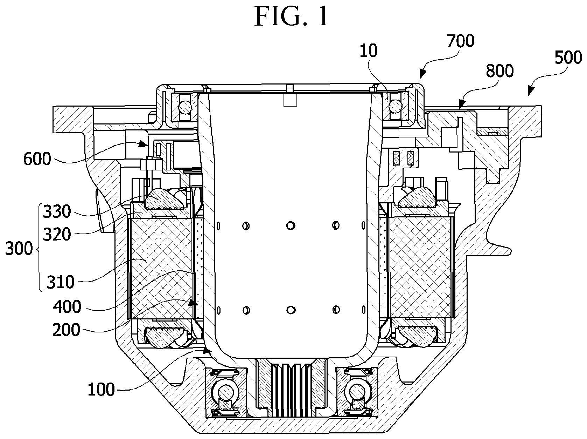

Fig.1 is a view illustrating a motor according to an embodiment.

Referring to Fig. 1, the motor according to the embodiment may include a rotor 100, a magnet 200, a stator 300, a cover 400, a housing 500, a bus bar 600, a plate 700 and a terminal part 800. Hereinafter, the term "inside" means a direction arranged toward the rotor 100 with respect to the radial direction of the motor, and "outside" means a direction opposite to the inside.

The rotor 100 may be a hollow member with one side open. In the axial direction, both ends of the rotor 100 may be rotatably supported by bearings, respectively. A shaft 100 may be arranged so that parts having different outer diameters are divided along the axial direction.

The magnet 200 may be disposed on the outer peripheral surface of the rotor 100.

The stator 300 is disposed outside the magnet 200. The stator 300 may include a stator core 40, an insulator 320 mounted on the stator core 310, and a coil 330 wound around the insulator 320. The coil 330 forms a magnetic field. The stator core 310 may be a single member or a combination of a plurality of divided cores. In addition, the stator core 310 may be formed in a form in which a plurality of plates in the form of thin steel plates are stacked on each other, but is not limited thereto. For example, the stator core 310 may be formed as a single piece.

The cover 400 fixes the magnet 200 to the rotor 100. The cover 400 covers a portion of the magnet 200 and the rotor 100. The cover 400 may be a mold member formed through overmolding, or a can member or an adhesive member surrounding the magnet.

The housing 500 may be disposed outside the stator 300. The housing 500 may be a cylindrical member with an open top. The housing 500 accommodates the shaft 100, the magnet 200, the stator 300, and the cover 400 therein. And the housing 500 may accommodate a bearing supporting the shaft 100.

The bus bar 600 is disposed on the upper side of the stator 300. The bus bar 600 connects the coils 330 wound around the stator 300.

The plate 700 is disposed on the upper side of the bus bar 600. The bearing 10 is accommodated inside the plate 700.

The terminal part 800 is disposed on the upper side of the plate 700.

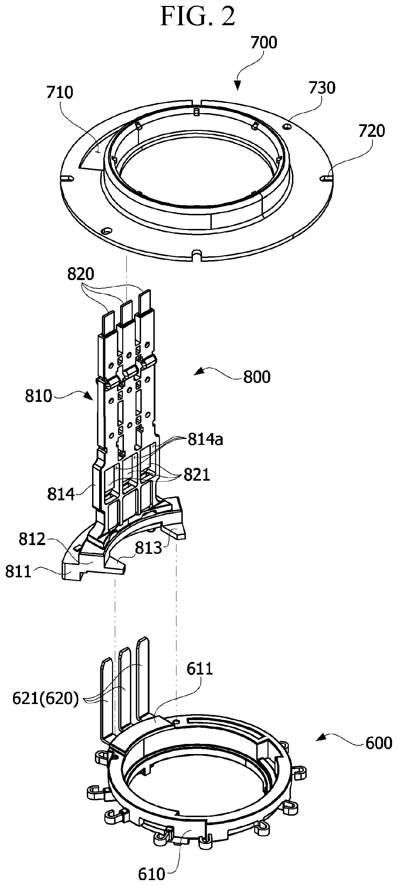

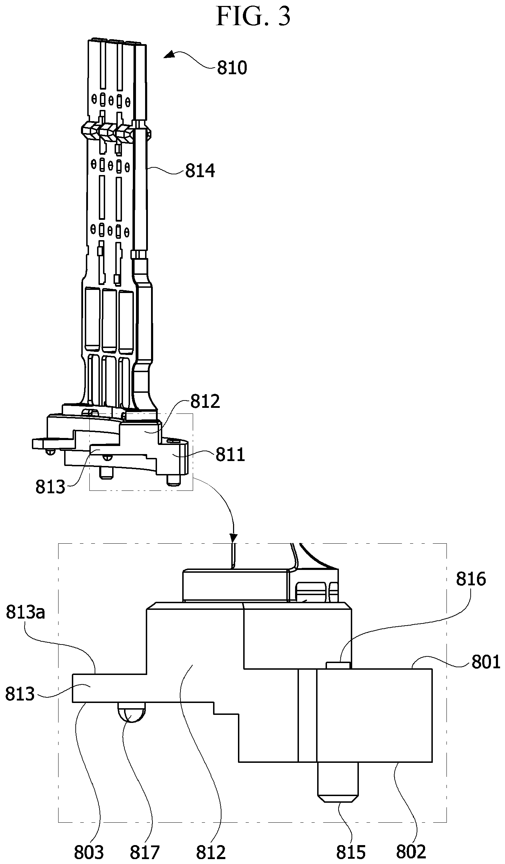

Fig. 2 is a view showing a state in which the bus bar 600, the plate 700, and the terminal part 800 are coupled to each other, and Fig. 3 is a diagram illustrating the bus bar 600, the plate 700, and the terminal part 800 before coupling.

Referring to Figs. 2 and 3, the bus bar 600 may be disposed in the lower side of the plate 700. The bus bar 600 may include a bus bar body 610 and a bus bar terminal 620. The bus bar body 610 may be an annular mold member. The bus bar terminal 620 may be connected to an end of the coil 330. And the second terminal 621 of the bus bar terminal 620 is in contact with the terminal part 800. The second terminal 621 is elongated upward. The three second terminals 621 may be respectively connected to powers of U, V, and W phases.

The plate 700 may include a first hole 710. The first hole 710 is formed through the upper and lower surfaces of the plate 700.

The terminal part 800 includes a body 810 and a terminal 820 disposed on the body 810. The body 810 surrounds the terminal 820. The body 810 may be a mold member disposed to be elongated in a vertical direction. This body 810 may be coupled through the first hole 710 of the plate 700.

The body 810 may include a first region protruding through the plate 700, a second region disposed on one surface of the housing 500, and a third region protruding from an inner surface of the second region. Here, the first region may correspond to the protrusion 814. The second region may correspond to the first body 811 and the second body 812. The third region may correspond to the leg portion 813.

The terminal 820 is connected to an external power source or a terminal of the housing cover that is connected to the external power source. The terminal 820 is fixed to the body 810. The first terminal 821 of the terminal 820 is in contact with the second terminal 621.

This terminal part 800 is separate from the bus bar 600.

Meanwhile, the body 810 may include a body part 811, 812, 813 and a protrusion 814. The body part 811, 812, 813 may be disposed between the housing 500 and the plate 700.The protrusion 814 protrudes through the first hole 710 of the plate 700.

It may include a first body 811, a second body 812, and a leg portion 813. The second body 812 extends from the upper surface of the first body 811. The second body 812 passes through the first hole 710. The leg portion 813 protrudes from the inner surface of the second body 812.

The protrusion 814 may be elongated in the axial direction of the second body 812.The first body 811 is for coupling between the terminal part 800 and the housing 500. The leg portion 813 is for coupling with the terminal part 800 and the bus bar. The leg portion 813 and the first body 811 supports a portion of the plate 700.

The terminal part 800 is fixed to the housing 500 on the outside, and is fixed to the bus bar 600 on the inside. In addition, it is also fixed in contact with the plate 700. Therefore, the terminal part 800 can be fixed fairly stably, even if it is not fixed to the plate 700 through fusion.

The second body 812 passes through the first hole 710 of the plate 700. The protrusion 814 includes a hole 814a. The aperture 814a is for exposing the second terminal 621 of the bus bar terminal 620 and the first terminal 821 of the terminal 820 to the outside for fusing. The second terminal 621 and the first terminal 821 are disposed to contact each other in the aperture 814a. The first terminal 821 and the second terminal 621 are in contact with an upper side of the plate 700.

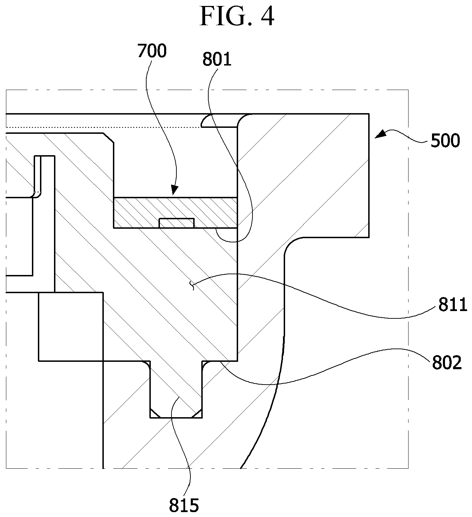

Fig. 4 is a view illustrating the terminal part 800 mounted on the housing 500.

Referring to FIG. 4, the second body 812 is a portion penetrating the plate 700.The first body 811 includes a first surface 801 and a second surface 802.The first surface 801 may be an upper surface of the first body 811, and the second surface 802 may be a lower surface of the first body 811. The first surface 801 and the second surface 802 may be disposed to face each other in the axial direction. The first face 801 is in contact with the plate 700. The second surface 802 is in contact with the housing 500. The first surface 801 and the second surface 802 may be planar. In addition, the first surface 801 and the second surface 802 may be surfaces perpendicular to the axial direction. The first body 811 is located inside the plate 700.

In such a structure of the terminal part 800, the first surface 801 and the second surface 802 are in surface contact with the plate 700 and the housing 500 along the circumferential direction of the plate 700 and the housing 500, respectively, thereby having very having structural stability. Therefore, it is possible to prevent the position of the terminal part 800 from being shaken or the position of the terminal part 800 from being shifted by an external force during the process in which the terminal part 800 is coupled.

The first body 811 may include a first protrusion 815.The first protrusion 815 protrudes from the second surface 802.The first protrusion 815 is for increasing the coupling force between the terminal part 800 and the housing 500 and facilitating position alignment. A plurality of first protrusions 815 may be provided.

The first body 811 may include a second protrusion 816. The second protrusion 816 protrudes from the first surface 801.The first protrusion 815 is for increasing the coupling force between the terminal part 800 and the plate 700. When the plate 700 and the second surface 802 are compressed, the second protrusion 816 is crushed to increase the coupling force between the terminal part 800 and the plate 700.

The leg portion 813 may include a third surface 803.The third surface 803 is in contact with one surface of the bus bar body 610. The leg portion 813 is also disposed on the inside of the plate 700. In addition, the leg portion 813 is in contact with one surface of the bus bar body 610 so as to overlap the bus bar body 610 in the axial direction. The leg portion 813 may include a third protrusion 817. The third protrusion 817 is for increasing the coupling force between the terminal part 800 and the bus bar 600.

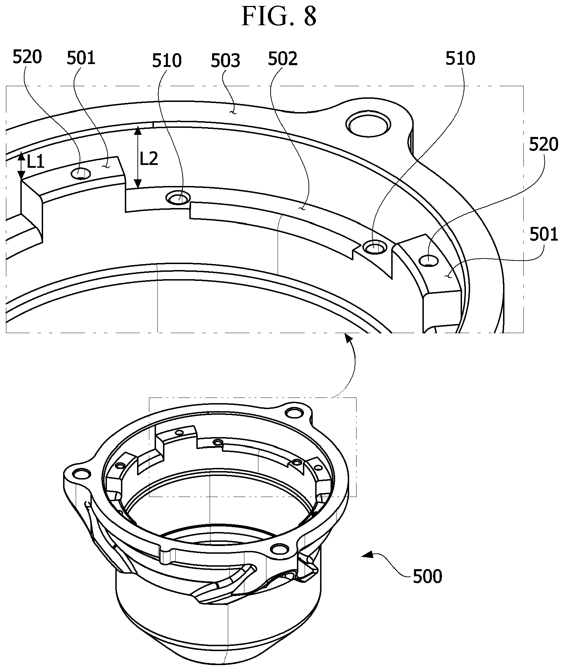

The housing 500 may include a first stepped portion (502 in FIG. 8), and the body 810 may include a second stepped portion. The body part 811, 812, and 813 may be disposed on the first stepped portion 502. The second stepped portion may be defined by an upper surface and an outer surface of the first body 811 and an outer surface of the second body 812. The upper surface 813a of the leg portion 813 may be disposed to have a lower height in the axial direction than the upper surface of the second stepped portion. Here, the upper surface of the second stepped portion corresponds to the first surface 801 of the first body 811.

Fig. 4 is a side cross-sectional view of the plate 700, the housing 500, and the terminal part 800.

Referring to Figs. 3 and 4, the first surface 801 of the first body 811 is in contact with one surface of the plate 700. The second surface 802 and the first protrusion 815 of the first body 811 are in contact with the housing 500. Since the first body 811 and the leg portion 813 are disposed inside the plate 700, when viewed in the axial direction, a considerable portion of the terminal part 800 is located inside the housing 500. Considering that the terminal part 800 is arranged to extend long in the axial direction, the terminal part 800 has very strong structural rigidity against bending acting on the outside.

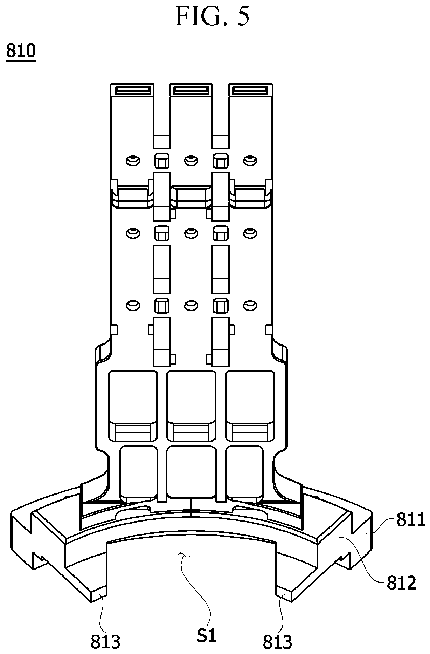

Fig. 5 is a view showing the body 810 of the terminal part 800.

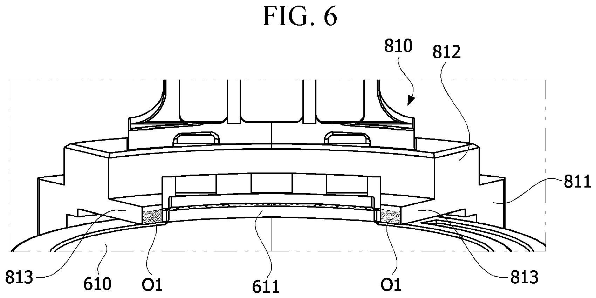

Referring to FIG. 5, the leg portion 813 extends inward from the second body 812. A plurality of leg portions 813 may be provided. For example, the two leg portions 813 may be disposed to be spaced apart with a space S1 therebetween. A fourth protrusion (611 in FIG. 6) of the bus bar body 610 is positioned in the corresponding space S1.

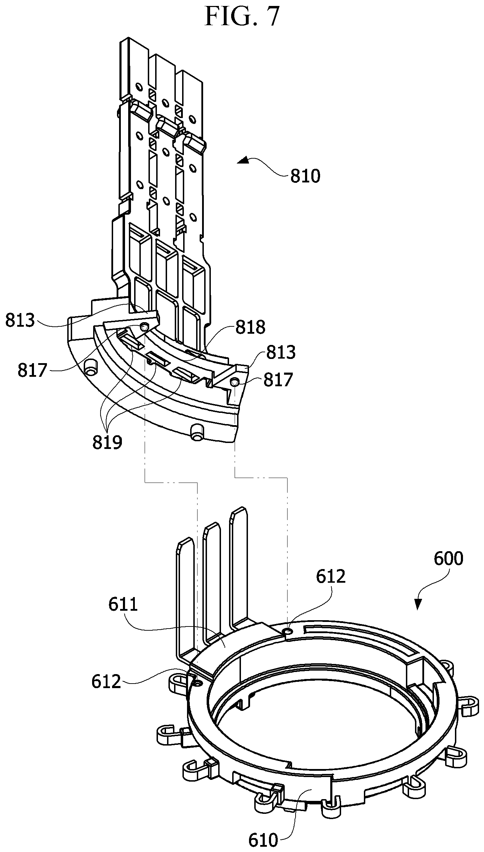

Fig. 6 is an enlarged view illustrating a coupling state between the leg portion 813 of the terminal part 800 and the bus bar 600, and Fig. 7 is an exploded view of the terminal part 800 and the bus bar 600.

Referring to Figs. 6 and 7, the bus bar 600 may include a fourth protrusion 611 protruding from one surface of the bus bar body 610. The fourth protrusion 611 may be disposed to form an overlap region 01 in the circumferential direction of the leg portion 813 and the bus bar 600. And the fourth protrusion 611 may be disposed between the two leg portions 813. This fourth protrusion 611 visually indicates the assembly position of the terminal part 800 and the bus bar 600. The bus bar terminal 620 is guided by the fourth protrusion 611.

A first groove 612 may be disposed on one surface of the bus bar body 610. The first groove 612 is a place where the third protrusion 817 of the leg portion 813 is press-fitted. The first groove 612 may be disposed adjacent to the fourth protrusion 611.

The second body 812 may include a second groove 818 and a second hole 819.The second groove 818 may be formed by digging a lower surface of the second body 812. The second hole 819 is a place where the second terminal 621 is disposed. The second hole 819 is disposed in the second groove 818. A plurality of second holes 819 may be provided. For example, the number of second holes 819 may be three.

The size of the second body 812 is less than the size of the first hole 710 of the plate 700.

Fig. 8 is a view illustrating a first stepped portion 502 and a third stepped portion 501 of the housing 500.

Referring to Fig. 8, the housing 500 may include a first stepped portion 502 and a third stepped portion 501.The third stepped portion 501 is in contact with the plate 700. The first stepped portion 502 is in contact with the second surface 802 of the first body 811 of the terminal part 800. The first stepped portion 502 may be disposed between the third stepped portion 501 and the third stepped portion 501 based on the circumferential direction of the housing 500. The third stepped portion 501 and the first stepped portion 502 are disposed to be stepped, thereby providing a space in which the first body 811 of the terminal part 800 is seated. In the axial direction, the distance L1 from one end of the housing 500 to the upper surface of the third stepped portion 501 can be larger than the distance (L2) from one end of the housing 500 to the upper surface of the first stepped portion 502. A portion of the first stepped portion 502 may be rounded.

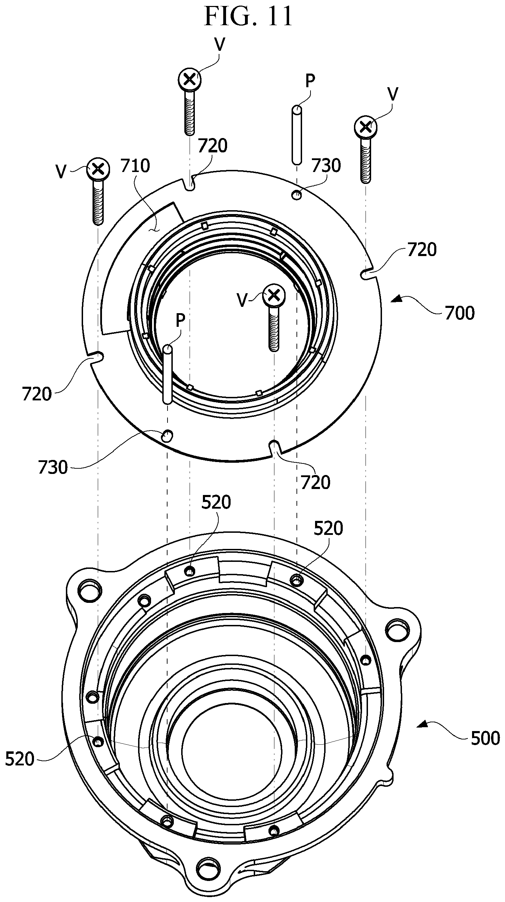

A third groove 520 may be formed in the third stepped portion 501. A fastening member (V of Fig. 11) penetrating the plate 700 may be coupled to the third groove 520. A fourth groove 510 may be formed in the first stepped portion 502. The first protrusion 815 of the first body 811 is press-fitted into the fourth groove 510 of the first stepped portion 502. A plurality of such third stepped portions 501 may be disposed.

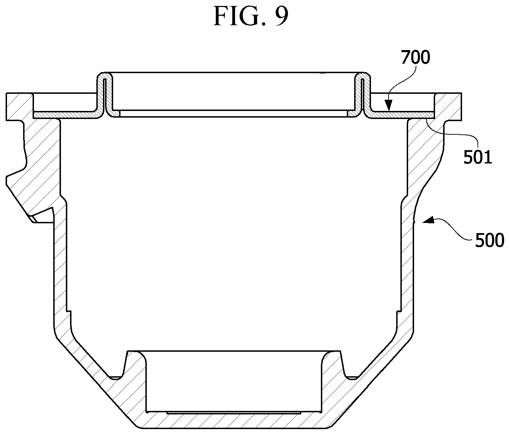

Fig. 9 is a side cross-sectional view of the plate 700 and the housing 500.

Referring to Fig. 9, the inner surface of the edge of the plate 700 is disposed to overlap the third stepped portion 501 of the housing 500 in the axial direction. The plate 700 is supported by the third stepped portion 501.

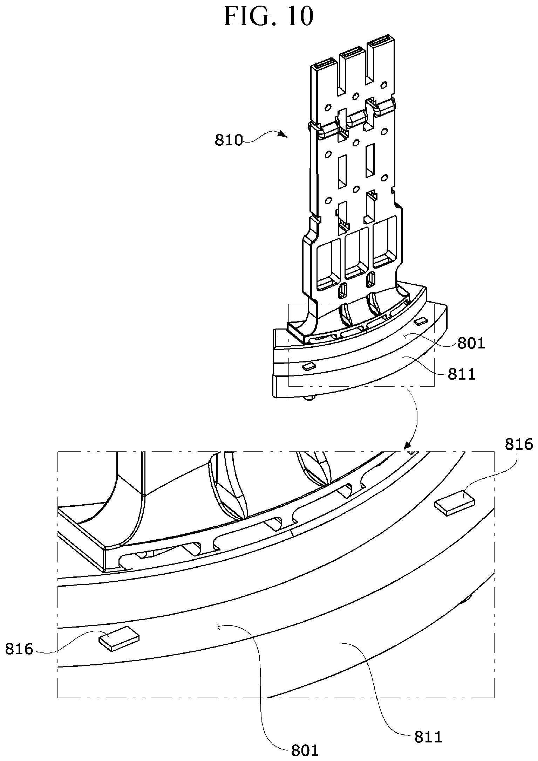

Fig. 10 is a view showing the second protrusion 816 disposed on the first body 811 of the terminal part 800, and Fig. 11 is a view showing the coupling between the plate 700 and the housing 500.

Referring to Fig. 10, a plurality of second protrusions 816 may be disposed on the first surface 801 of the first body 811.

Referring to Fig. 11, the plate 700 may include a plurality of holes 720 and 730. These holes 720 and 730 are formed through the upper and lower surfaces of the plate 700. These holes 720 and 730 align the second terminal 621 of the terminal 620 of the bus bar 600 and the first terminal 821 of the terminal 820, and fix the plate 700 to the housing.

In a state where the holes 720 and 730 of the plate 700 and the third grooves 520 of the housing 500 are aligned, the position of the upper end of the terminal 820 is aligned with the terminal of the cover of the housing or the terminal of the external power supply.

In a state in which the terminal part 800 is coupled to the housing 500 and the bus bar 600, if the pin (P) is inserted into the third groove 520 of the housing 500 by passing through the hole 730 of the plate 700, the tolerance for the upper position of the terminal 820 can be reduced. In a state in which the pin (P) is inserted into the hole 730 and the third groove 520, the fastening member V is fastened to the third groove 520 to fix the plate 700 to the housing 500. The pin (P) is removed in the state in which the fastening member (V) is fastened.

When the plate 700 is fixed by the fastening member (V), the plate 700 presses the first surface 801 and the second surface 802 of the first body 811. And the second protrusion 816 is crushed by the compression force by the fastening member (V). As the second protrusion 816 is plastically deformed and crushed, the coupling force between the plate 700 and the first body 811 of the terminal part 800 is increased.

Since the terminal part 800 is first coupled to the housing 500 and the bus bar 600 instead of the plate 700, the terminal part 800 is easily mounted. Thereafter, when the plate 700 is coupled to the housing 500, since the plate 700 presses the terminal part 800, the terminal part 800 may be more firmly fixed.

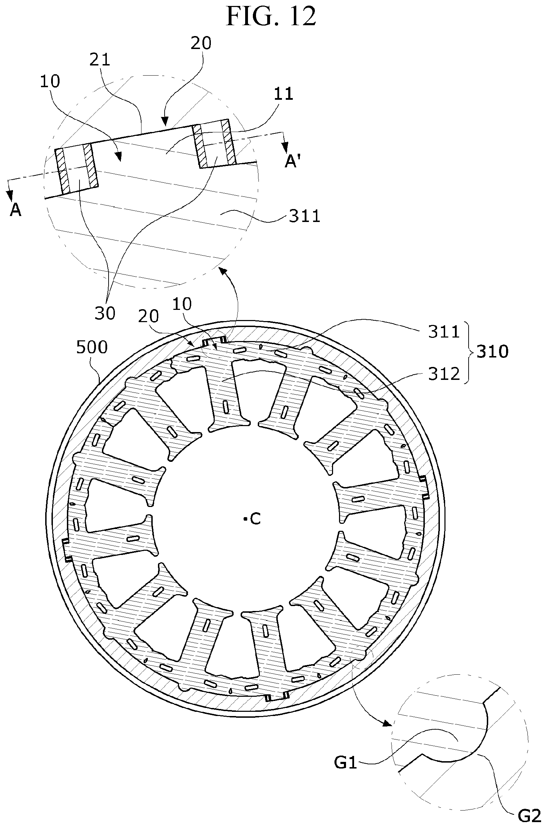

Hereinafter, the coupling state between the housing and the stator core will be described with reference to Figs. 12 to 20.

Fig. 12 is a plan view schematically illustrating a coupling state between the stator and the housing.

Referring to Fig. 12, the stator core 310 may include a yoke 311 and teeth 312. Teeth 312 are arranged to extend inwardly from the yoke 311. A coil 330 is wound around the teeth 312. In this case, the stator core 310 is inserted into the open upper portion of the housing 500. The stator core 310 may contact the inner circumferential surface of the housing 500.

The stator core 310 may have a first coupling portion 10 disposed on an outer side thereof. In addition, the second coupling portion 20 may be disposed on the inner side of the housing 500. At this time, while the stator core 310 is accommodated in the housing 500, the first coupling portion 10 and the second coupling portion 20 may be coupled. In this case, the movement of the first coupling portion 10 is limited in the circumferential direction with respect to the second coupling portion 20, and may be slid in the axial direction. Accordingly, the protrusion 30 formed on the housing 500 may fix the axial movement of the first coupling portion 10. In this case, the protrusion 30 may limit the upward movement of the first coupling portion 10. The protrusion 30 may cover one side of the upper surface of the first coupling portion 10.

The first coupling portion 10 may include a first coupling protrusion 11. The first coupling protrusion 11 protrudes outward from the outer circumferential surface of the stator core 310. The first coupling protrusion 11 may be plural. The plurality of first coupling protrusions 11 may be arranged in a circumferential direction with respect to the axial center (C). The plurality of first coupling protrusions 11 may be spaced apart from each other in the circumferential direction. In this case, the first coupling protrusion 11 may radially overlap the teeth 312 of the stator core 310. And, the first coupling protrusion 11 may be in the shape of a quadrangular pole. In this case, the first coupling protrusion 11 may extend long in the axial direction. The upper surface of the first coupling protrusion 11 may be lower than the top of the second coupling portion 20.

The second coupling portion 20 may include a second coupling groove 21. The second coupling groove 21 may be formed on the inner circumferential surface of the housing 500. The second coupling groove 21 may be plural. The plurality of second coupling grooves 21 may correspond to the positions of the first coupling protrusions 11 and may be arranged in a circumferential direction with respect to the axial center C. The plurality of second coupling grooves 21 may be spaced apart from each other in the circumferential direction.

A first coupling protrusion 11 is disposed inside the second coupling groove 21. The second coupling groove 21 may be formed to correspond to the shape of the first coupling protrusion 11. The second coupling groove 21 may be a square groove. In this case, the second coupling groove 21 may be formed to have a larger width than the first coupling protrusion 11. Accordingly, the first coupling protrusion 11 may be slidably inserted into the second coupling groove 21. In this case, the first coupling protrusion 11 serves as a key to prevent slippage occurring between the housing 500 and the stator core 310, and the second coupling groove 21 plays a role of a key way.

Meanwhile, the stator core 310 may include at least one first guide part G1. The first guide part G1 may be plural. The plurality of first guide parts G1 may be arranged in a circumferential direction with respect to the axial center (C). The plurality of first guide parts G1 may be spaced apart from each other in the circumferential direction. In this case, the plurality of first guide parts G1 may be spaced apart from each other at equal intervals. A first coupling protrusion 11 may be disposed between the plurality of first guide parts G1 in the circumferential direction. The first guide part G1 may be disposed on a surface facing the housing 500 of the stator core 310. In this case, the first guide part G1 may be a guide protrusion protruding outward. In this case, the guide protrusion may have a curved outer circumferential surface.

The housing 500 may include at least one second guide part G2. The second guide part G2 may be plural. The number of the second guide parts G2 is the same as the number of the first guide parts G1. The plurality of second guide parts G2 may be disposed to correspond to positions of the first guide parts G1. A second coupling groove 21 may be disposed between the plurality of second guide parts G2 in the circumferential direction. The second guide part G2 may be disposed on a surface facing the stator core 310 of the housing (500). In this case, the second guide part G2 may be a guide groove in which the guide protrusion is disposed. In this case, the guide groove may have a curved surface in contact with the curved surface of the guide protrusion. The first guide part G1 and the second guide part G2 serve to guide the stator core 310 to its original position while the stator core 310 is inserted into the housing 500.

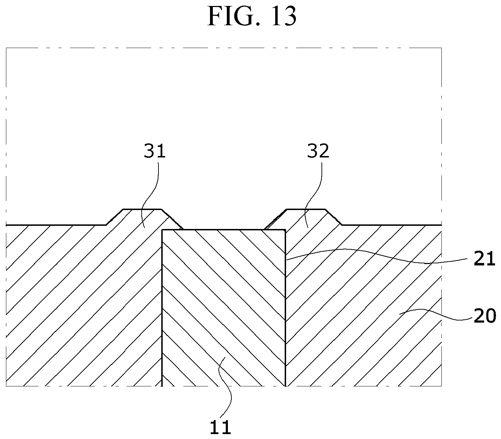

Fig. 13 is a cross-sectional view taken along AA'.

Referring to Fig.13, the protrusion 30 may include a first protrusion 31 and a second protrusion 32. The first protrusion 31 may cover one side of the upper surface of the first coupling portion 10. And, the second protrusion 32 may cover the other side of the upper surface of the first coupling portion 10. In this case, the first protrusion 31 and the second protrusion 32 may be spaced apart from each other in the circumferential direction. In addition, the first protrusion 31 and the second protrusion 32 may overlap in the circumferential direction. The first protrusion 31 and the second protrusion 32 may have different shapes.

The first protrusion 31 and the second protrusion 32 extend from one surface of the housing 500. The first protrusion 31 and the second protrusion 32 may extend from the upper surface of the second coupling portion 20. The first protrusion 31 and the second protrusion 32 may protrude upward from the upper surface of the second coupling portion 20. In addition, the first protrusion 31 and the second protrusion 32 may protrude in the circumferential direction toward the upper side of the first coupling protrusion 11. The protruding first protrusion 31 and the second protrusion 32 may overlap the second coupling groove 21 in the axial direction. In this case, the protruding protrusion 30 may cover a portion of the upper surface of the first coupling protrusion 11. The thickness of the first protrusion 31 and the second protrusion 32 may be non-uniform. Each of the first protrusion 31 and the second protrusion 32 may have a thinner thickness as it goes toward the ends. These first protrusion 31 and second protrusion 32 may be formed by caulking two steps disposed on the second coupling portion 20. Meanwhile, the protrusion 30 may be formed by caulking two regions of the first coupling protrusion 11 and the adjacent second coupling portion 20.

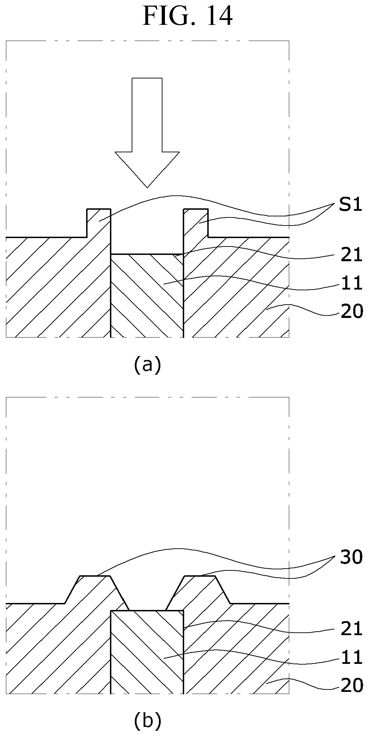

Fig. 14 is a view showing the protrusion 30 before and after caulking.
(a) of Fig. 14 shows the shape of the protrusion 30 before caulking. A step S1 is formed on the upper surface of the second coupling portion 20. In this case, the stepped S1 is formed around the second coupling groove 21. There may be two steps S1. And the step S1 may be disposed on both sides of the circumferential direction of the second coupling groove 21. The step S1 may guide the first coupling protrusion 11 to the second coupling groove 21 while the stator core 310 is inserted into the housing 500. On the other hand, although it is not shown in the drawings, the step may be one or two or more.
(b) of Fig. 14 shows the shape of the protrusion 30 after caulking. The step S1 shown in (a) of FIG. 14 is pressed by a caulking jig. In this case, the protrusion 30 is formed as the step S1 is deformed. The protrusion 30 may have a longer width in the circumferential direction and a lower axial thickness than the step S1. The number of protrusions 30 is the same as the number of steps S1 before caulking. When the number of steps S1 before caulking is two, the protrusion 30 may be formed in two. In this case, the two protrusions 30 may have different shapes.

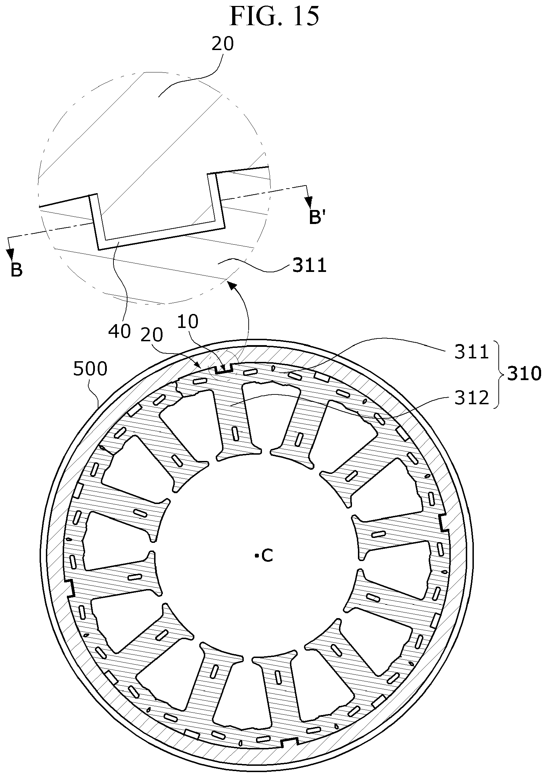

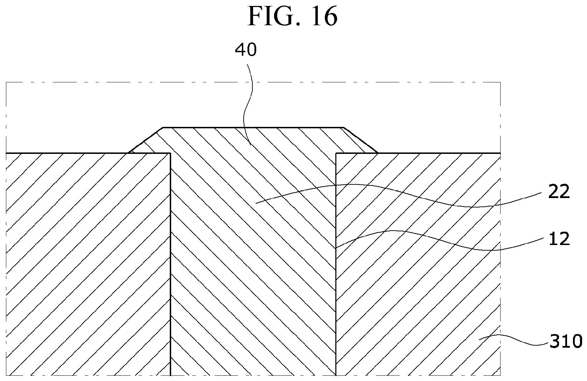

Fig. 15 is a plan view schematically illustrating a modified example of the stator and the housing, and Fig. 16 is a cross-sectional view taken along BB'. Components having the same reference numerals as those shown in Figs. 11 to 14 are identical members having the same shape and function, and thus a repetitive description thereof will be omitted.

Referring to Fig. 15, the first coupling portion 10 may include a first coupling groove 12, and the second coupling portion 20 may include a second coupling protrusion 22. At this time, the protrusion 40 covers a portion of the upper surface of the stator core 310 to fix the stator core 310.

The first coupling groove 12 is formed on the outer peripheral surface of the stator core 310. In this case, the first coupling groove 12 may be plural. The plurality of first coupling grooves 12 may be arranged in a circumferential direction with respect to the axial center (C). The plurality of first coupling grooves 12 may be spaced apart from each other in the circumferential direction. The first coupling groove 12 may radially overlap the teeth 312.

The second coupling protrusion 22 protrudes from the inner circumferential surface of the housing 500. The second coupling protrusion 22 may be plural. The plurality of second coupling protrusions 22 may be arranged in a circumferential direction with respect to the axial center (C), corresponding to the position of the first coupling groove 12. The plurality of second coupling protrusions 22 may be spaced apart from each other in the circumferential direction.

The second coupling protrusion 22 is disposed inside the first coupling groove 12. The second coupling protrusion 22 may have a quadrangular prism shape. And the first coupling groove 12 may be a square groove corresponding to the shape of the second coupling protrusion 22. In this case, the first coupling groove 12 may be formed to be larger than the second coupling protrusion 22. Accordingly, the second coupling protrusion 22 may be slidably inserted into the first coupling groove 12.

The protrusion 40 extends from one surface of the housing 500. The protrusion 40 may extend from the upper end of the second coupling protrusion 22. In addition, the protrusion 40 may be arranged to extend in the circumferential direction from the second coupling protrusion 22 to cover the upper surface of the stator core 310. The thickness of the protrusion 40 may be non-uniform. The protrusion 40 may have a thinner thickness toward the end. The protrusion 40 may be formed by caulking the upper surface of the second coupling protrusion 22.

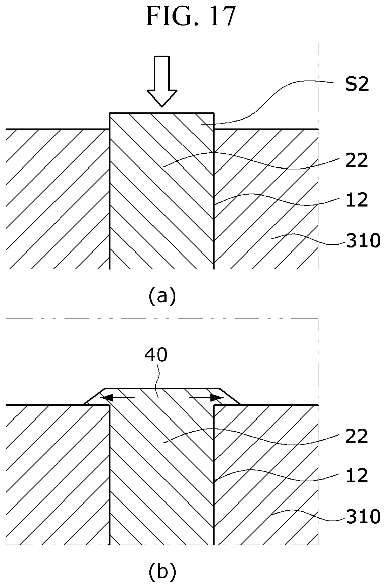

Fig. 17 is a view showing before and after caulking of the protrusion 40 shown in Fig. 16.
(a) of Fig. 17 shows the shape of the protrusion 40 before caulking. In this case, the protrusion S2 is formed on the upper end of the second coupling protrusion 22. The protrusion S2 is disposed higher than the upper surface of the stator core 310.
(b) of Fig. 17 shows the shape of the protrusion 40 after caulking. The protrusion S2 shown in (a) of Fig. 17 is pressed by a caulking jig. In this case, the protrusion 40 is formed while the protrusion S2 is deformed. The protrusion 40 has a longer width in the circumferential direction and a lower axial thickness than the protrusion S2.

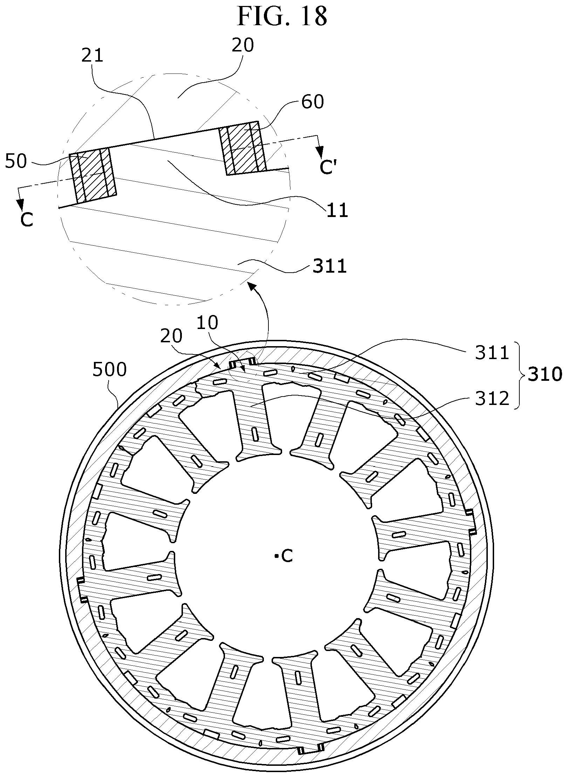

Fig. 18 is a plan view schematically illustrating a modified example of the stator and the housing. Since components having the same reference numerals as those shown in Figs. 11 to 17 are the same members having the same shape and function, a repetitive description will be omitted.

Referring to Fig. 18, the housing 500 may include a first protrusion 50 and a second protrusion 60. In this case, the first protrusion 50 and the second protrusion 60 are formed by caulking at least two regions of the second coupling portion 20. The first protrusion 50 covers one side of the first coupling portion 10, and the second protrusion 60 covers the other side of the first coupling portion 10.

In this case, upper surfaces of the first protrusion 50 and the second protrusion 60 formed by caulking may be higher or lower than the upper surface of the second coupling portion 20. The first protrusion 50 and the second protrusion 60 may have different shapes.

Meanwhile, the first coupling portion 10 may include a first coupling protrusion 11, and the second coupling portion 20 may include a second coupling groove 21. In this case, the second coupling groove 21 may be formed to be larger than the first coupling protrusion 11. This is to allow the first coupling protrusion 11 to be slidably inserted into the second coupling groove 21. Accordingly, a clearance may be formed between the first coupling protrusion 11 and the second coupling groove 21.

In this case, the first side surface 11a and the second side surface 11b disposed in the circumferential direction of the first coupling protrusion 11 are spaced apart from the housing 500. And, when the motor operates, vibration of the stator core 310 occurs due to the separation space.

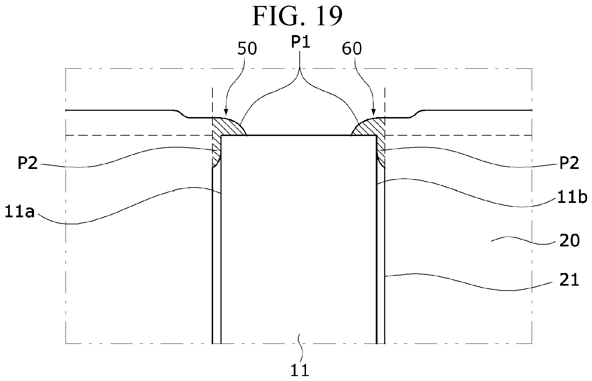

Fig. 19 is a cross-sectional view taken along CC'.

Referring to Fig. 19, the first protrusion 50 and the second protrusion 60 may have a first region P1 disposed higher than the first coupling protrusion 11 and a second region P2 overlapping the first coupling protrusion 11 in a circumferential direction. In this case, the first region P1 protrudes upward of the first coupling protrusion 11. The first region P1 covers a portion of the upper surface of the first coupling protrusion 11. In addition, the second region P2 protrudes toward the first side surface 11a and the second side surface 11b of the first coupling protrusion 11. In this case, the second region P2 of the first protrusion 50 is in contact with the first side surface 11a, and the second region P2 of the second protrusion 60 is in contact with the second side surface 11b, so that the first coupling protrusion 11 may be fixed in the circumferential direction.

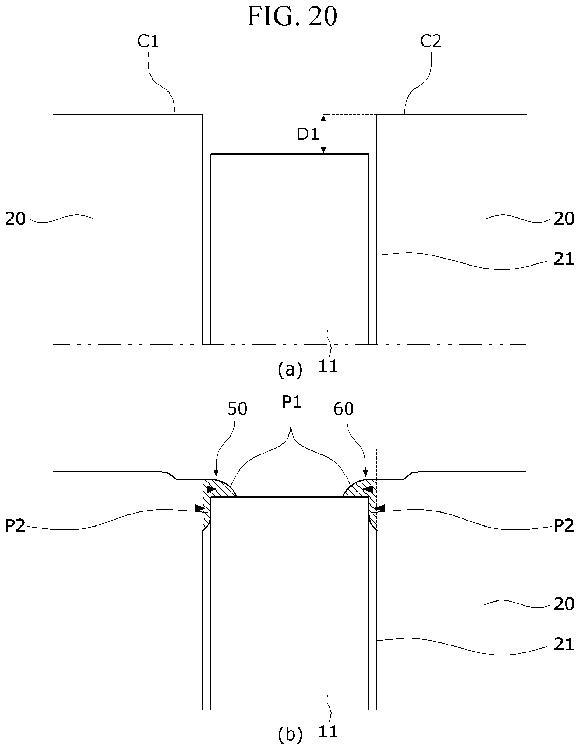

Fig. 20 is a view showing before and after caulking of the protrusion shown in Fig. 19.
(a) of Fig, 20 shows the shape of the first protrusion 50 and the second protrusion 60 before caulking. In this case, the second coupling portion 20 of the housing 500 is disposed higher than the first coupling protrusion 11. The upper surface of the first coupling protrusion 11 and the upper surface of the second engaging portion 20 has a height difference D1. In this case, at least two regions of the second coupling portion 20 are set as the caulking regions C1 and C2 using a caulking jig. The caulking regions C1 and C2 are located above the first coupling protrusion (11). The caulking regions C1 C2 of the second coupling portion 20 may be spaced apart from each other in the circumferential direction.
(b) of Fig. 20 shows the shape of the first protrusion 50 and the second protrusion 60 after caulking. The upper surface of the second coupling portion 20 near the second coupling groove 21 is pressed by the caulking jig.

One caulking region C1 of the second coupling portion 20 is caulked to form a first protrusion 50, and the other caulking region C2 of the second coupling portion 20 is caulked to form a second protrusion 60. In this case, while the caulking regions C1 and C2 are pressed by the caulking jig, the portion located higher than the first coupling protrusion 11 of the second coupling portion 20 may be protruded and deformed toward the second coupling groove 21. Here, the caulking regions C1 and C2 may be respectively pressed by a caulking jig. In this case, the caulking regions C1 and C2 may be pressed in different directions. Each of the caulking regions C1 and C2 may be pressed obliquely toward the second coupling groove 21 side. The first protrusion 50 and the second protrusion 60 may be formed by the protruding portion of the second coupling portion 20.

In this case, the first protrusion 50 and the second protrusion 60 may form a first region P1 protruding upward of the first coupling protrusion 11. In addition, the first protrusion 50 and the second protrusion 60 may protrude toward the side of the first coupling protrusion 11 to form a second region P2 in contact with both side surfaces. Accordingly, the first protrusion 50 and the second protrusion 60 may fix the stator core 310 in the axial direction through the first region P1, and may fix the stator core 310 through the second region P2 in the circumferential direction.

In the above-described embodiment, the inner rotor type motor has been described as an example, but the present invention is not limited thereto. The present invention is also applicable to an outer rotor type motor. In addition, it can be used in various devices such as vehicles or home appliances.

### <Reference Sign List>

100: Shaft, 200: rotor, 300: stator, 310: stator core, 320: insulator, 400: cover, 500: housing, 600: bus bar, 610: bus bar body, 620: bus bar terminal, 700: plate, 800: terminal part, 10: first coupling portion, 11: first coupling protrusion, 12: first coupling groove, 20: second coupling portion, 21: second coupling groove, 22: second coupling protrusion, 30, 40: protrusion , 31, 50: first protrusion, 32, 60: second protrusion

## Claims

1. A motor comprising:
a rotor;
a stator disposed to correspond to the rotor;
a housing accommodating the stator; and
a bus bar electrically connected to the stator, wherein the housing includes a first stepped portion on which at least a portion of the bus bar is disposed.

2. The motor according to claim 1, comprising:
a plate disposed on the bus bar;
a terminal part disposed on the bus bar;
wherein the plate includes a first hole, and the terminal part includes a body part disposed between the housing and the plate and a protrusion protruding through the first hole of the plate.

3. The motor according to claim 1, comprising:
a plate disposed on the bus bar;
a terminal part disposed on the bus bar;
wherein the plate includes a first hole, and the terminal part includes a first region protruding through the plate, a second region disposed on one surface of the housing, and a third region protruding from an inner surface of the second region.

4. The motor according to claim 2, wherein the body part of the terminal part includes a first body, a second body extending from the upper surface of the first body and penetrating the plate, and a leg portion protruding from the inner surface of the body,
the leg portion and the first body support a portion of the plate, and
the body part includes a second stepped portion defined by the upper surface and the outer surface of the first body and the outer surface of the second body.

5. The motor according to claim 4, wherein a third protrusion is formed on the lower surface of the leg portion,
the bus bar includes a first groove formed in the periphery of the upper surface in which the protrusion is disposed,
the third protrusion is disposed in the first groove, and
an upper surface of the leg portion is disposed lower in an axial direction than an upper surface of the second stepped portion.

6. The motor according to claim 1, wherein the stator comprises a stator core,
the stator core has a first coupling portion formed on the outer side thereof,
the housing has a second coupling portion coupled to the first coupling portion which is formed on the inner portion theeof, and
the second coupling portion motor including a first protrusion covering one side of the upper surface of the first coupling portion.

7. The motor according to claim 6, wherein the first protrusion is formed by caulking an upper surface of the second coupling portion.

8. The motor according to claim 6, wherein the housing includes a second protrusion covering the other side of the upper surface of the first coupling portion, and
the second protrusion is formed by caulking an upper surface of the second coupling portion.

9. The motor according to claim 6, wherein any one of the first coupling portion and the second coupling portion includes a first coupling protrusion, and
the other of the first coupling portion and the second coupling portion includes a second coupling groove in which the first coupling protrusion is disposed.

10. The motor according to claim 6, wherein the stator core includes at least one first guide part formed on an outer circumferential surface, and
the housing includes at least one second guide part formed on an inner circumferential surface and coupled to the first guide part.
